# EUROPEAN PATENT SPECIFICATION

(11) **EP 2 929 171 B1**
(45) Date of publication and mention of the grant of the patent: **22.02.2017**
(21) Application number: 12844659.8
(22) Date of filing: 07.12.2012
(51) Int. Cl.: F02M 37/20, B60K 15/035, F16K 11/044

(54) **VALVE MECHANISM FOR AN INTERNAL COMBUSTION ENGINE, INTERNAL COMBUSTION ENGINE AND AUTOMOTIVE VEHICLE**
VENTILMECHANISMUS FÜR EINE BRENNKRAFTMASCHINE, BRENNKRAFTMASCHINE UND KRAFTFAHRZEUG
MÉCANISME DE SOUPAPE POUR UN MOTEUR À COMBUSTION INTERNE, MOTEUR À COMBUSTION INTERNE ET VÉHICULE AUTOMOBILE

(43) Date of publication of application: 14.10.2015
(73) Proprietor: Volvo Truck Corporation, 405 08 Göteborg (SE)
(72) Inventor: GRANGE, Thomas, F-69003 Lyon (FR); COSTE, Hervé, F-38090 ROCHE (FR); BOUTIN, Baptiste, F-38110 La Tour du Pin (FR)
(74) Representative: Faucheux, Jérôme
(86) International application number: PCT/IB2012/003005
(87) International publication number: WO 2014/087188

(56) References cited:
- WO-A1-95/21641
- WO-A1-03/031852
- FR-A1- 2 783 019
- JP-A- 2008 038 695
- US-A- 3 338 257
- US-A- 4 592 382
- US-A1- 2005 081 831
- US-B2- 7 717 092

## Description

### TECHNICAL FIELD OF THE INVENTION

The present invention concerns, on the one hand, a valve mechanism for an internal combustion engine and, on the other hand, an internal combustion engine and an automotive vehicle including such a valve mechanism.

### BACKGROUND OF THE INVENTION

In the field of internal combustion engines, a low pressure fuel pump is generally connected to the fuel tank. The low pressure fuel pump feeds a fuel filter with fuel. At the outlet of the filter, fuel is directed towards the engine cylinders. For example, one or several high pressure fuel pumps may be connected to the outlet of the fuel filter. The high pressure fuel pump(s) may distribute the fuel to fuel injectors injecting the fuel into the cylinders of the internal combustion engine.

US-A-2005/0081831 discloses a valve mechanism disposed downstream from the fuel filter. In a first embodiment, the valve mechanism includes two valve-pistons movable in a housing. The valve-pistons are arranged coaxially with an inner and an outer valve-piston. The housing includes a clean fuel inlet connected to the outlet of the fuel filter, a clean fuel outlet whereby fuel is directed towards the cylinders, and an air vent passage connected to the fuel tank.

The valve-pistons are movable in the housing and may occupy at least three different positions. In a closed position, which occurs when the engine is turned off, the valve-pistons block the inlet of the housing to prevent backflow of clean fuel into the fuel filter. In an air-purge position which occurs when the engine is being turned on but where it is essentially air which flows out of the filter, the inner valve-piston lifts up to allow the air in the filter to flow towards the air vent passage and to evacuate into the fuel tank. In the air-purge position, the outer valve-piston prevents any fuel or air flow towards the clean fuel outlet. Thus, all or at least most of the air in the fuel filter is evacuated before the fuel starts flowing towards the cylinders. In an opened position which occurs once all the air is evacuated from the fuel filter, the outer valve-piston lifts up under the action of the fuel, to allow the fuel to flow towards the clean fuel outlet. In the same time, the valve blocks the air vent passage.

In US-B-7 717 092, a one-piece valve is described. In the air-purge position, air is allowed to flow into the clean fuel outlet and to reach the cylinders, which represents a substantial risk for the engine. In the closed position, the clean fuel outlet communicates with the air outlet. Thus, there is a risk for the clean fuel in the high-pressure pump to leak back into the air outlet, which may drain the fuel circuit downstream of the fuel outlet.

### SUMMARY

The aim of this invention is to provide an improved valve mechanism for an internal combustion engine of an automotive vehicle, limiting the risk of fuel drain towards the air outlet, and having a reduced weight.

To this end, the invention concerns a valve mechanism for an internal combustion engine, comprising:
- a chamber having :
   ∘ at least one inlet,
   ∘ at least one fuel outlet,
   ∘ at least one air outlet and
- a single-piece valve member housed in the chamber.

The valve member is movable along an axis between:
- a closed position, wherein the valve member blocks the inlet,
- an opened position, wherein the valve member does not block neither the housing inlet nor the fuel outlet, and wherein the valve member blocks the air outlet.

The valve includes at least one by-pass having a first end opening in the chamber on the side of the housing inlet, and a second end opening in the chamber on the side of the air outlet, and in an air-purge position, the valve member blocks the fuel outlet and does not block the inlet nor the first or second ends of the by-pass, so that a fluid can flow from the inlet along the by-pass and evacuates into the air outlet.

Thanks to the invention, the valve is a single-part piece having a reduced weight. Thus, the efficiency of the system is increased. Moreover, in the air-purge position, the air is prevented from flowing into the clean fuel outlet. In this way, the air is prevented from damaging the internal combustion engine.

According to further aspects of the invention which are advantageous but not compulsory, such a method may incorporate one or several of the following features:
- The chamber is defined by a lateral internal surface having an overall cylindrical shape extending along the axis.
- The valve member includes a sealing zone in the shape of a cylinder having a cross section complementary to the cross section of the lateral internal surface defining the chamber.
- The diameter of the internal surface defining the chamber is equal, within the operating clearances, to the diameter of the sealing zone of the valve member.
- Along the axis, the height of the sealing zone of the valve member is strictly greater than the height of the fuel outlet.
- At least in the air-purge position, the sealing zone of the valve member blocks the fuel outlet.
- In the opened position, along the axis, the sealing zone of the valve member is on the side of the air outlet with respect to the fuel outlet.
- In the air-purge position, along the axis, the first end of the by-pass is situated on the side of the inlet with respect to the sealing zone of the valve member.
- In the air-purge position, along the axis, the second end of the by-pass is situated on the side of the air outlet with respect to the sealing zone of the valve member.
- Along the axis, the distance between the first end and the second end of the bypass is strictly greater than the height of the sealing zone of the valve member.
- The by-pass is angularly offset around the axis with respect to the fuel outlet.
- The chamber is defined by a housing including two separate parts assembled together.
- The valve member includes a first sealing contact zone able to come into contact in a fluid tight manner against a first seat zone of the chamber, situated along the axis on the side of the inlet, and the valve member includes a second sealing contact zone able to rest in a fluid tight manner against a second seat zone of the chamber, situated along the axis on the side of the air outlet.
- In the closed position, the first sealing contact zone of the valve member comes into contact in a fluid tight manner against the first seat zone of the housing.
- In the opened position and in the air-purge position, the first sealing contact zone of the valve member is separated from the first seat zone by a non-zero distance.
- In the opened position, the second sealing contact zone of the valve member comes into contact in a fluid tight manner against the second seat zone of the housing.
- Along the axis, the first end of the by-pass is situated on the side of the air outlet with respect to the first seat zone.
- Along the axis and in a direction from the inlet to the air outlet, the valve member is movable in an intermediate position between the air-purge position and the closed position, in which the valve member blocks the second end of the by-pass and but is not in sealing contact with the second seat zone.

Another object of the invention is an internal combustion engine including such a valve mechanism.

Optionally, the inlet is connected to the outlet of a fuel filter, in that the fuel outlet is connected to a fuel pump and wherein the air outlet is connected to a fuel tank.

Another object of the invention is an automotive vehicle including such an internal combustion engine.

### BRIEF DESCRIPTION OF THE DRAWINGS

This invention will now be explained in correspondence with the following figures, as an illustrative example and without restricting its object. In the annexed figures:
- figure 1 is an exploded perspective view of a valve mechanism according to the invention ;
- figures 2, 3 and 4 are longitudinal sections of the valve mechanism of figure 1, taken along the plane P on figure 1, in three different positions ;
- figure 5 is a cross section of the valve mechanism of figure 1 taken along the plane V on figure 4 ; and
- figure 6 is a longitudinal section of the valve mechanism of figure 1, taken along the plane VI on figure 5.

### DETAILED DESCRIPTION

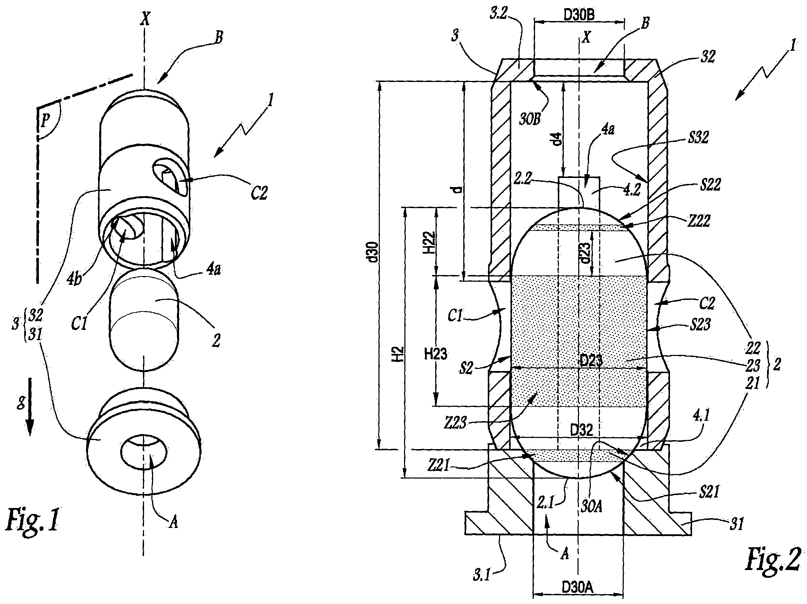

Figures 1 to 6 show a valve mechanism 1 including a valve member 2 housed in chamber defined by a housing 3. The valve mechanism 1 may be part of an internal combustion engine. The internal combustion engine may be part of an automotive vehicle, for example a truck, or of another type of machine.

The valve mechanism 1 has an overall elongated shape extending along a longitudinal axis X. In operation, axis X is substantially vertical. Axis X is substantially parallel to earth's gravity field g.

In this description, the term "longitudinal" relates to a direction parallel to the axis X. The term "up" or "upper" is used to described elements on the upper part of figures 1 to 4and 6, contrary to the "low" or "lower" elements which are lower than the upper elements along the axis X.

Along the axis X, the valve member 2 includes a central part 23 in the shape of a cylinder. The central part 23 may be of circular cross section but other shapes of non-circular cross sections are possible. The longitudinal lower end 2.1 and upper end 2.2 of the valve member 2 are, in this embodiment, formed by convex and rounded parts 21 and 22, for example having a half-sphered shape. The end parts 21 and 22 are connected to the central part 23 of the valve member 2. The lateral surface S23 of the central part 23 may be continuous with the external surfaces S21 and S22 of the rounded parts 21 and 22.

In the example depicted on the figures, the parts 21, 22 and 23 of the valve member 2 are not separated but form a single part as they are manufactured together at the same time, for example by machining a metallic block.

The chamber defined by the housing 3 has an overall cylindrical hollow shape and extends along the axis X. In the embodiment shown on the figures, the housing 3 includes two separate parts 31 and 32 assembled together.

The lower part 31 of the housing 3 has an overall cylindrical hollow shape. An inlet A for the chamber defined by the housing 3 extends through the lower part 31, along the axis X. An optional chamfer 30A is added on the upper edge of the inlet A, situated on the side of the valve member 2, i.e. on the side of the chamber defined by the housing, in order to increase the reliability of the valve mechanism 1. The chamfer 30A forms a lower seat surface for the valve member 2. The lower seat surface 30A extends transversally to the valve axis along which the valve member 2 is moveable.

The upper part 32 of the housing 3 defines a lateral internal surface S32 in the shape of a cylinder having a circular cross section but other shapes of non-circular cross sections are possible. As will be explained hereunder, the diameter of the lateral internal surface S32 is preferably made equal, within the operating clearances, to the diameter D23 of the central part 23 of the valve member 2, in order to create a substantially fluid tight contact.

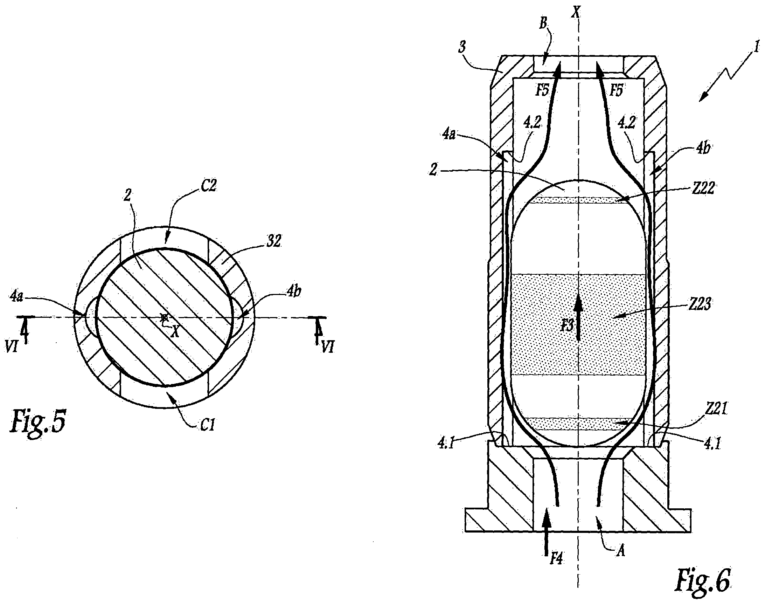

One or several by-passes 4a and 4b are provided which have an inlet and an outlet opening in the chamber delimited by the housing 3. In the example shown, two by-passes are embodied as two longitudinal grooves 4a and 4b diametrically opposed and machined in the lateral internal surface S32 of the upper part 32 of the housing 3. The grooves 4a and 4b are parallel with the axis X. As can be seen on figure 5, the section of the grooves 4a and 4b may be rounded. A by-pass could be provided under the form of a tubular conduit having an inlet and an outlet opening in the chamber delimited by the housing 3.

One or several holes, for example two circular holes C1 and C2, are machined in the internal surface S32 of the upper part 32 of the housing 3 and form fuel outlets.

The holes C1 and C2 may be diametrically opposed and may be arranged angularly offset by 90° around the axis X relative to the grooves 4a and 4b.

The fuel outlets C1 and C2 extend in a radial direction so that the pressure of the fluid in the fluid circuit downstream of the fuel outlets C1 and C2 do not substantially affect the movement of the valve member 2 inside the housing 3 when said outlets are blocked by the valve member in the way described hereunder.

The upper end 3.2 of the upper part 32 of the housing 3 is formed by a transverse annular wall in which is defined an air outlet B. An optional chamfer 30B is added on the lower edge of the outlet B situated on the side of the valve member 2, i.e. on the side of the chamber defined by the housing, forming an upper seat surface for the valve member 2. The upper seat surface 30B extends transversally to the valve axis along which the valve member 2 is moveable. The lower end of the upper part 32 of the housing 3 is opened and is assembled to the upper end of the lower part 31 of the housing 3.

When the inlet A and the air outlet B do not have chamfers, the valve seats 30A and 30B are circular lineic seat zones, and the contact zone between the valve member 2 and the valve seats 30A and 30B is lineic.

All in all, the chamber defined by the housing 3 is cylindrical and extends along an axis X between a first axial extremity, in which is formed the inlet A, and a second axial extremity, in which is formed the air outlet B. The fuel outlet C1, C2 is formed in a lateral cylindrical surface S32 of the chamber between the first and second axial extremities.

In the shown embodiment, the distance d30 between the seat surfaces 30A and 30B, taken along the axis X, is strictly greater than the height H2 of the valve member 2, taken along the axis X between the lower end 2.1 and the upper end 2.2 of the valve member 2.

In the shown embodiment, the seat surfaces 30A and 30B have respective minimum diameters D30A and D30B strictly smaller than the diameter D32 of the internal surface S32 defining the chamber.

Also, it can be provided that the distance d between the upper seat surface 30B and the fuel outlets C1 and C2, taken along the axis X, is strictly greater than the height H23 of the central part 23 of the valve member 2, taken along the axis X.

As can be seen on figure 6, the lower ends 4.1 of the grooves 4a and 4b form a fluid inlet for the by-pass formed by said groove which opens onto the lower edge of the upper part 32 of the housing 3. In the flow direction of the fuel, in other words along the axis X and from the inlet A towards the air outlet B, the lower ends 4.1 of the grooves 4a and 4b are situated downstream from the lower seat surface 30A. Along the axis X, the lower ends 4.1 of the grooves 4a and 4b are situated between the lower seat surface 30A and the upper seat surface 30B.

The upper ends 4.2 of the grooves 4a and 4b are separated from the upper seat surface 30A of the inlet A by a non-zero distance d4 strictly greater than the height H22 of the upper part 22 of the valve member 2. The upper ends 4.2 of the grooves 4a and 4b form a fluid outlet for the by-pass.

The length L4 of the grooves 4a and 4b, taken along the axis X between the lower end 4.1 and the upper end 4.2, is strictly greater than the height H23 of the central part 23 of the valve member 2.

The height H_{C} of the fuel outlets C1 and C2, taken along the axis X, is strictly lower than the height H23 of the central part 23 of the valve member 2.

The inlet A is connected to the outlet of a fuel filter of the internal combustion engine. The air outlet B is connected for example to the fuel tank, or to a vapour canister or to the atmosphere. The fuel outlets C1 and C2 are connected to at least one fuel consumer, for example a high pressure fuel pump of the internal combustion engine.

Figure 2 shows a closed position of the valve mechanism 1. When the engine is stopped, there is no fuel pressure in the fuel circuit upstream from the valve mechanism 1, particularly in the fuel filter. Due to the gravity, the valve member 2 is in its downmost position and a lower sealing contact zone Z21 of the lower part 21 of the valve member 2, here arranged on the rounded external surface S21, comes into contact with the lower seat surface 30A of the housing 3 in a fluid tight manner.

Thus, the fuel cannot flow backwards from the chamber defined by the housing through the inlet A. In this way, the clean fuel in the cylinder head cannot flow back towards the fuel filter. Thereby, if there is a need to replace the fuel filter, the fuel inside of the fuel circuit downstream of the valve cannot leak outside through the inlet.

In addition, it can be provided as in the shown embodiment that, in the closed position, the lateral surface S23 of the valve member 2 blocks the fuel outlets C1 and C2 in a fluid tight manner. The central part 23 forms a central sealing zone Z23 of the valve member 2. Thereby, there is no risk for the clean fuel in the high-pressure pump to leak back from the fuel outlets C1 and C2 to the air inlet, through the chamber defined by the housing 3. This prevents draining of the fuel circuit downstream of the valve.

As the lower ends 4.1 of the grooves 4a and 4b are situated downstream from the lower seat surface 30A, fluid cannot flow from the chamber delimited by the housing 3 past the inlet A.

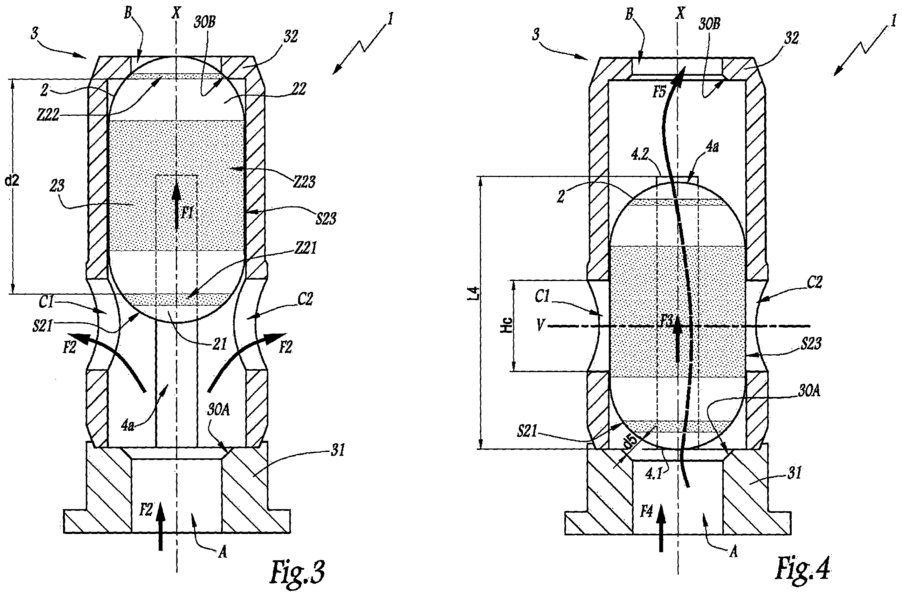

Figure 3 shows an opened position of the valve mechanism 1. When the internal combustion engine is running in steady phase, the fuel pressure in the fuel filter downstream from the valve mechanism 1 is for example roughly equal to 4 bars at idle speed. The fuel pressure creates an upwardly oriented force F1 which is parallel to axis X. When the force F1 reaches a high pressure threshold roughly equal to 0,7 bar, it lifts the valve member 2 in its uppermost position. The value of the high pressure threshold can be modified by changing the design of the valve mechanism 1, such as modifying the weight of the valve member, modifying the surface of the valve member exposed to the fuel, and/or modifying the by-passes in order to modify the pressure loss of the fluid through the bypass.

In this opened position, as the lower sealing contact zone Z21 of the valve member 2 is separated from the lower seat surface 30A by a non-zero distance, the valve member 2 does not block the inlet A so that clean fuel can flow into the housing 3. The lateral surface S23 of the central part 23 of the valve member 2 is above the fuel outlets C1 and C2 so that the fuel can flow from the inlet A to the fuel outlets C1 and C2, as indicated by arrows F2.

As shown by figure 3, the whole lateral surface S23 of the central part 23 of the valve member 2 is above the fuel outlets C1 and C2. In other words, along the axis X, the lateral surface S23 is on the side of the air outlet B with respect to the fuel outlets C1 and C2. Thus, the fuel outlets C1 and C2 are fully open.

In a non-depicted embodiment, the fuel outlets C1 and C2 may be partially closed by the lateral surface S23 in the opened position. In the opened position, the fuel outlets C1 and C2 are at least partially open, and the lateral surface S23 of the valve member 2 optionally partially closes the fuel outlets C1 and C2.

In the opened position (figure 3), an upper sealing contact zone Z22 of the upper part 22 of the valve member 2, here arranged on the rounded external surface S22, comes into contact with the upper seat surface 30B of the housing 3 in a fluid tight manner. Thus, the valve member 2 blocks the outlet B so that fluid cannot flow outside of the housing 3 by flowing through the air outlet B. This prevents fuel from leaking to the fuel tank through the air outlet B and ensures a better efficiency as fuel does not circulate in a closed loop.

It can be noted that the lower sealing contact zone Z21 and the upper sealing contact zone Z22 of the valve member 2 are located axially on opposite sides of the central sealing zone Z23 of the valve member 2.

The distance d2, taken along the axis X, between the lower contact zone Z21 and the upper contact zone Z22, is strictly smaller than the distance d30 between the lower seat surface 30A and the upper seat surface 30B. This ensures that the valve member 2 can move axially within the chamber delimited by the housing 3.

Figures 4 to 6 show an air-purge position of the valve mechanism 1. When the internal combustion engine is being turned on, the fuel filter downstream from the valve mechanism 1 may not be entirely filled with fuel. For example, after the fuel filter has been replaced with a new filter, there is air in the new fuel filter. The pressure downstream from the valve member 2 creates a force F3 having a lower intensity compared with the force F1 of the opened position (figure 3). This force F3 lifts up the valve member 2 in an air-purge position as soon as it reaches a lower pressure threshold which can for example be comprised between 100 and 300 mbar. The value of the lower pressure threshold can be modified by changing the design of the valve mechanism 1 as explained above with respect to the higher pressure threshold.

In the air-purge position (figures 4 to 6), the lower sealing contact zone Z21 of the lower part 21 of the valve member 2 is separated from the lower seat surface 30A by a non-zero distance d5. In this way, fluid is allowed to enter into the housing 3 by the inlet A, as represented by arrow F4.

In the air-purge position, the lateral surface S23 of the valve member 2, i.e. the central sealing zone Z23, fully blocks the fuel outlets C1 and C2 in a fluid tight manner so that the air is prevented from flowing towards the fuel outlets C1 and C2. In this way, the air is prevented from entering into the cylinder head so that the internal combustion engine cannot be damaged.

In order to achieve the fluid-tight sealing of the fuel outlets C1 and C2, the geometry of the lateral surface S23 of the valve member 2 is complementary to the geometry of the internal surface S32 of the housing 3. The operating clearance between the lateral surface S23 and the internal surface S32 allow the valve member 2 to slide inside the housing 3 while preventing the fluids from flowing through the fuel outlets C1 and C2. This operating clearance may allow a small amount of fluid to flow, but this leakage is not significant. Potentially, in operation, a film of fuel lines the internal surface S32 of the housing 3 and contributes to the fluid tightness by sealing the fuel outlets C1 and C2. The same fluid sealing effect could be achieved by providing the lower and upper limits of the sealing zone Z23 each with a seal, for example an O-ring, mounted of the valve member 2 and sliding in a fluid tight manner along the lateral internal surface 32 of the housing 3.

As the valve member 2 is separated from the lower seat surface 30A by a non-zero distance d5, the valve member 2 does not block the lower end 4.1 of the grooves 4a and 4b so that air, or more generally a fluid, can flow from the inlet A into the grooves 4a and 4b, as indicated by arrow F5. In order to allow the fluid to flow from the inlet A into the grooves 4a and 4b, the lower end 4.1 of the grooves 4a and 4b, or more generally the inlet of the by-pass, have to be situated downstream from the lateral surface S23 of the valve member 2 forming the central sealing zone Z23.

In this position, the outlet of the bypass, here embodied as the upper ends 4.2 of the grooves 4a and 4b, opens into the chamber delimited by housing 3, above the sealing zone Z23 of valve member 2. Thus, the air flowing into the grooves 4a and 4b can evacuate into the air outlet B as the fuel filter is being filled with fuel. In this way, the grooves 4a and 4b constitute a by-pass.

In other words, when the valve member 2 is in the air-purge position, the central sealing zone Z23 extends axially from a location above the by-pass inlet and up to a location below the by-pass outlet, so the by-pass provides an effective fluid circulating path for fluid from a lower portion of the chamber, on the inlet side, to an upper portion of the chamber, on the air-outlet side.

In the shown embodiment, the lower and upper sealing zones Z21 and Z22 do not interact with the lateral internal surface S32 of the housing, at least when the valve member 2 is in its air-purge position.

As the air in the fuel filter is being replaced with fuel, the pressure and the force F3 increase and lifts up the valve member 2 in the open position of figure 3 when it reaches the high pressure threshold.

Along the axis X and in a direction from the inlet A to the air outlet B, the valve member 2 is movable in an intermediate position between the air-purge position of Figure 4 and the open position of Figure 3. From said intermediate position until just before the open position of Figure 3, the valve member 2 blocks the upper end 4.2 of the grooves 4a and 4b but is not yet in sealing contact with the valve seat 30B.

During the lift of the valve member 2, the lateral surface S23 of the valve member 2 first blocks the upper ends 4.2 of the grooves 4a and 4b, as soon as the upper end of the lateral surface S23 reaches the intermediate position in which it oversteps the upper ends 4.2 of the grooves 4a and 4b, i.e. the outlet of the bypass. Thereby, from this position, fluid cannot flow past the valve member through the air outlet B. This makes it easier for the valve member 2 to reach the closed position (figure 3) without unsteady states.

The distance d4 between the bypass outlet formed by the upper ends 4.2 of the grooves 4a and 4b and the upper seat surface 30B, is strictly greater than the distance d23, taken along the axis X, between the upper end of the lateral surface 23 of the valve member 2 and the upper sealing contact zone Z22. Thus, in the above mentioned intermediate position, the upper sealing contact zone Z22 of the valve member 2 is separated from the upper seat surface 30B by a non-zero distance, while the sealing of the bypass outlet is achieved by the lateral surface S23 of the valve member 2.

As long as the pressure downstream from the valve member 2 is comprised between the lower and upper pressure thresholds, the valve mechanism 1 is in the air-purge position (figures 4 to 6).

When the pressure downstream from the valve member 2 is lower than the lower pressure threshold, the weight of the valve member 2 brings it back in the closed position (figure 2).

In any case, it can be notes that the valve member 2 is moved from its closed position to its air-purge position and further to its opened position exclusively by the action, on the valve member itself, of the fluid pressure coming from the inlet. Nevertheless, biasing means, such as a spring, could be provided for assisting the movement of the valve member back towards its closed position.

The valve member is the only moveable member of the valve for achieving the desired closed, air-purge and opened states of the valve. The valve mechanism does not necessitate any external control.

The valve member 2 is relatively light because it is a single-piece part.

The valve member 2 is preferably monolithic, in other words the valve member 2 has no movable parts. In figures 1 to 6, the valve member 2 is made from a single metallic block but in a non-depicted variant, the valve member may be monolithic while at the same time including two or more elements assembled together, for example metallic elements and gaskets.

The valve member 2 may be made of metal, for example steel or aluminium, or of a synthetic material such as plastic.

The pressure drop caused by the valve mechanism 1 is low because the weight of the valve member 2 is reduced. Thus, the fuel flow into the cylinder head is increased, without the need to use a more efficient or larger fuel pump.

In the embodiment shown on the figures, the housing 3 is a separate part which may be assembled in a body such as a fuel filter head. This makes it easier to machine the internal surface S32 of the housing 3 with precise dimensional tolerances. Optionally, when there are at least two fuel outlets C1 and C2, the fuel filter head may block at least one of the fuel outlets C1 and C2.

As a variant, the housing could be integral with the fuel filter head, without being a separate part.

In a non-depicted variant, the housing 3 may be formed by a recess directly formed in the fuel filter head.

According to other embodiments of the invention:
- the number of fuel outlets C1 and C2 may be higher or lower than two,
- the number of air outlets B may be higher than one,
- the number of by-passes 4a and 4b may be higher or lower than two,
- the grooves 4a and 4b may be non-linear,
- the section of the grooves 4a and 4b may be non-rounded,
- the end parts 21 and 22 of the valve member 2 may be non-spherical, for example they may have a conic or frustroconical shape,
- the grooves 4a and 4b may be replaced with by-pass ducts.

The technical features of the embodiments and variants mentioned here above can be combined.

## Claims

1. Valve mechanism (1) for an internal combustion engine, comprising:
- a chamber having :
∘ at least one inlet (A),
∘ at least one fuel outlet (C1, C2),
∘ at least one air outlet (B) and
- a single-piece valve member (2) housed in the chamber,
the valve member (2) being movable along an axis (X) between:
- a closed position (figure 2), wherein the valve member (2) blocks the inlet (A),
- an opened position (figure 3), wherein the valve member (2) does not block neither the inlet (A) nor the fuel outlet (C1, C2), and wherein the valve member (2) blocks the air outlet (B),
the valve mechanism (1) being **characterized in that** the valve includes at least one by-pass (4a, 4b) having a first end (4.1) opening in the chamber on the side of the inlet (A), and a second end (4.2) opening in the chamber on the side of the air outlet (B), and **in that**, in an air-purge position, the valve member (2) blocks the fuel outlet (C1, C2) and does not block the inlet (A) nor the first and second ends (4.1, 4.2) of the by-pass (4a, 4b), so that a fluid can flow (F5) from the inlet (A) along the by-pass (4a, 4b) and evacuates into the air outlet (B).

2. Valve mechanism (1) according to claim 1, **characterized in that** the chamber is defined by a lateral internal surface S32 having an overall cylindrical hollow shape extending along the axis (X), and **in that** the fuel outlet is formed in the lateral internal surface (S32).

3. Valve mechanism (1) according to claim 2, **characterized in that** the valve member (2) includes a sealing zone (Z23) in the shape of a cylinder having a cross section complementary to the cross section of the lateral internal surface (S32) defining the chamber.

4. Valve mechanism (1) according to claims 2 and 3, **characterized in that** the diameter of the internal surface (S32) defining the chamber is equal, within the operating clearances, to the diameter (D2) of the sealing zone (Z23) of the valve member (2).

5. Valve mechanism (1) according to any of claims 3 or 4, **characterized in that**, along the axis (X), the height (H23) of the sealing zone (Z23) of the valve member (2) is strictly greater than the height (H_{C}) of the fuel outlet (C1, C2).

6. Valve mechanism (1) according to any of claims 3 to 5, **characterized in that**, in the air-purge position, the sealing zone (Z23) of the valve member (2) blocks the fuel outlet (C1, C2).

7. Valve mechanism (1) according to any of claims 3 to 6, **characterized in that**, in the opened position, along the axis (X), the sealing zone (Z23) of the valve member (2) is on the side of the air outlet (B) with respect to the fuel outlet (C1, C2).

8. Valve mechanism (1) according to any of claims 3 to 7, **characterized in that**, in the air-purge position, along the axis (X), the first end (4.1) of the by-pass (4a, 4b) is situated on the side of the inlet (A) with respect to the sealing zone (Z23) of the valve member (2).

9. Valve mechanism (1) according to any of claims 3 to 8, **characterized in that**, in the air-purge position, along the axis (X), the second end (4.2) of the by-pass (4a, 4b) is situated on the side of the air outlet (B) with respect to the sealing zone (Z23) of the valve member (2).

10. Valve mechanism (1) according to any of claims 3 to 9, **characterized in that**, along the axis (X), the distance (L4) between the first end (4.1) and the second end (4.2) of the bypass (4a, 4b) is strictly greater than the height (H23) of the sealing zone (Z23) of the valve member (2).

11. Valve mechanism (1) according to any of the preceding claims, **characterized in that** the by-pass (4a, 4b) is angularly offset around the axis (X) with respect to the fuel outlet (C1, C2).

12. Valve mechanism (1) according to any of the preceding claims, **characterized in that** the chamber is defined by a housing (3) including two separate parts (31, 32) assembled together.

13. Valve mechanism (1) according to any of the preceding claims, **characterized in that** the valve member (2) includes a first sealing contact zone (Z21) able to come into contact in a fluid tight manner against a first seat zone (30A) of the chamber, situated along the axis (X) on the side of the inlet (A), and **in that** the valve member (2) includes a second sealing contact zone (Z22) able to rest in a fluid tight manner against a second seat zone (30B) of the chamber, situated along the axis (X) on the side of the air outlet (B).

14. Valve mechanism (1) according to claim 13, **characterized in that**, in the closed position, the first sealing contact zone (Z21) of the valve member (2) comes into contact in a fluid tight manner against the first seat zone (30A) of the chamber.

15. Valve mechanism (1) according to any of claims 13 or 14, **characterized in that**, in the opened position and in the air-purge position, the first sealing contact zone (Z21) of the valve member (2) is separated from the first seat zone (30A) by a non-zero distance (d5).

16. Valve mechanism (1) according to any of claims 13 to 15, **characterized in that**, in the opened position, the second sealing contact zone (Z22) of the valve member (2) comes into contact in a fluid tight manner against the second seat zone (30B) of the chamber.

17. Valve mechanism (1) according to any of claims 13 to 16, **characterized in that**, along the axis (X), the first end (4.1) of the by-pass (4a, 4b) is situated on the side of the air outlet (B) with respect to the first seat zone (30A).

18. Valve mechanism (1) according to any of the claims 13 to 17, **characterized in that**, along the axis (X) and in a direction from the inlet (A) to the air outlet (B), the valve member (2) is movable in an intermediate position between the air-purge position and the closed position, in which the valve member (2) blocks the second end (4.2) of the by-pass (4a, 4b) but is not in sealing contact with the second valve seat zone.

19. Internal combustion engine, **characterized in that** it includes a valve mechanism (1) according to one of the preceding claims.

20. Internal combustion engine according to claim 19, **characterized in that** the inlet (A) is connected to the outlet of a fuel filter, **in that** the fuel outlet (C1, C2) is connected to a fuel pump and wherein the air outlet (B) is connected to a fuel tank.

21. Automotive vehicle, **characterized in that** in includes an internal combustion engine according to any of claims 19 or 20.

## Patentansprüche

1. Ventilmechanismus (1) für einen Verbrennungsmotor, umfassend:
- eine Kammer mit:
• wenigstens einem Einlass (A),
• wenigstens einem Kraftstoffauslass (C1, C2),
• wenigstens einem Luftauslass (B) und
- einem einstückigen Ventilelement (2), das in der Kammer untergebracht ist, wobei das Ventilelement (2) entlang einer Achse (X) bewegbar ist zwischen:
- einer geschlossenen Position (Figur 2), wobei das Ventilelement (2) den Einlass (A) blockiert,
- einer geöffneten Position (Figur 3), wobei das Ventilelement (2) weder den Einlass (A) noch den Kraftstoffauslass (C1, C2) blockiert, und wobei das Ventilelement (2) den Luftauslass (B) blockiert,
wobei der Ventilmechanismus (1) **dadurch gekennzeichnet ist, dass** das Ventil wenigstens einen Bypass (4a, 4b) umfasst, der ein erstes Ende (4.1), das in die Kammer auf der Seite des Einlasses (A) mündet, und ein zweites Ende (4.2) aufweist, das in die Kammer auf der Seite des Luftauslasses (B) mündet, und dass in einer Luftreinigungsposition das Ventilelement (2) den Kraftstoffauslass (C1, C2) blockiert und weder den Einlass (A) noch das erste und das zweite Ende (4.1, 4.2) des Bypasses (4a, 4b) blockiert, so dass ein Fluid von dem Einlass (A) entlang des Bypasses (4a, 4b) strömen (F5) kann und in den Luftauslass (B) abgeführt wird.

2. Ventilmechanismus (1) nach Anspruch 1, **dadurch gekennzeichnet, dass** die Kammer durch eine laterale Innenfläche (S32) gebildet wird, die eine insgesamt zylindrische Hohlform aufweist, die sich entlang der Achse (X) erstreckt, und dass der Kraftstoffauslass in der lateralen Innenfläche (S32) ausgebildet ist.

3. Ventilmechanismus (1) nach Anspruch 2, **dadurch gekennzeichnet, dass** das Ventilelement (2) eine Abdichtungszone (Z32) in der Form eines Zylinders umfasst, die einen Querschnitt aufweist, der zu dem Querschnitt der die Kammer bildenden lateralen Innenfläche (S32) komplementär ist.

4. Ventilmechanismus (1) nach den Ansprüchen 2 und 3, **dadurch gekennzeichnet, dass** der Durchmesser der die Kammer bildenden Innenfläche (S32) innerhalb der Betriebsabstände gleich dem Durchmesser (D2) der Abdichtungszone (Z23) des Ventilelements (2) ist.

5. Ventilmechanismus (1) nach einem der Ansprüche 3 oder 4, **dadurch gekennzeichnet, dass** entlang der Achse (X) die Höhe (H23) der Abdichtungszone (Z23) des Ventilelements (2) stets größer als die Höhe (H_{C}) des Kraftstoffauslasses (C1, C2) ist.

6. Ventilmechanismus (1) nach einem der Ansprüche 3 bis 5, **dadurch gekennzeichnet, dass** in der Luftreinigungsposition die Abdichtungszone (Z23) des Ventilelements (2) den Kraftstoffauslass (C1, C2) blockiert.

7. Ventilmechanismus (1) nach einem der Ansprüche 3 bis 6, **dadurch gekennzeichnet, dass** in der geöffneten Position die Abdichtungszone (Z23) des Ventilelements (2) entlang der Achse (X) bezüglich des Kraftstoffauslasses (C1, C2) auf der Seite des Luftauslasses (B) ist.

8. Ventilmechanismus (1) nach einem der Ansprüche 3 bis 7, **dadurch gekennzeichnet, dass** in der Luftreinigungsposition sich das erste Ende (4.1) des Bypasses (4a, 4b) entlang der Achse (X) bezüglich der Abdichtungszone (Z23) des Ventilelements (2) auf der Seite des Einlasses (A) befindet.

9. Ventilmechanismus (1) nach einem der Ansprüche 3 bis 8, **dadurch gekennzeichnet, dass** in der Luftreinigungsposition sich das zweite Ende (4.2) des Bypasses (4a, 4b) entlang der Achse (X) bezüglich der Abdichtungszone (Z23) des Ventilelements (2) auf der Seite des Luftauslasses (B) befindet.

10. Ventilmechanismus (1) nach einem der Ansprüche 3 bis 9, **dadurch gekennzeichnet, dass** der Abstand (L4) zwischen dem ersten Ende (4.1) und dem zweiten Ende (4.2) des Bypasses (4a, 4b) entlang der Achse (X) strikt größer als die Höhe (H23) der Abdichtungszone (Z23) des Ventilelements (2) ist.

11. Ventilmechanismus (1) nach einem der vorhergehenden Ansprüche, **dadurch gekennzeichnet, dass** der Bypass (4a, 4b) um die Achse (X) bezüglich des Kraftstoffauslasses (C1, C2) um einen Winkel verschoben ist.

12. Ventilmechanismus (1) nach einem der vorhergehenden Ansprüche, **dadurch gekennzeichnet, dass** die Kammer durch ein Gehäuse (3) gebildet wird, das zwei separate Teile (31, 32) umfasst, die zusammengebaut sind.

13. Ventilmechanismus (1) nach einem der vorhergehenden Ansprüche, **dadurch gekennzeichnet, dass** das Ventilelement (2) eine erste Abdichtungskontaktzone (Z21) umfasst, die in fluiddichten Kontakt mit einer ersten Sitzzone (30A) der Kammer kommen kann, die sich entlang der Achse (X) auf der Seite des Einlasses (A) befindet, und dass das Ventilelement (2) eine zweite Abdichtungskontaktzone (Z22) aufweist, die fluiddicht an einer zweiten Sitzzone (30B) der Kammer anliegen kann, die sich entlang der Achse (X) auf der Seite des Luftauslasses (B) befindet.

14. Ventilmechanismus (1) nach Anspruch 13, **dadurch gekennzeichnet, dass** in der geschlossenen Position die erste Abdichtungskontaktzone (Z21) des Ventilelements (2) in fluid-dichten Kontakt mit der ersten Sitzzone (30A) der Kammer kommt.

15. Ventilmechanismus (1) nach einem der Ansprüche 13 oder 14, **dadurch gekennzeichnet, dass** in der geöffneten Position und in der Luftreinigungsposition die erste Abdichtungskontaktzone (Z21) des Ventilelements (2) von der ersten Sitzzone (30A) durch einen Nicht-Null-Abstand (d5) getrennt ist.

16. Ventilmechanismus (1) nach einem der Ansprüche 13 bis 15, **dadurch gekennzeichnet, dass** in der geöffneten Position die zweite Abdichtungskontaktzone (Z22) des Ventilelements (2) in fluiddichten Kontakt mit der zweiten Sitzzone (30B) der Kammer kommt.

17. Ventilmechanismus (1) nach einem der Ansprüche 13 bis 16, **dadurch gekennzeichnet, dass** sich das erste Ende (4.1) des Bypasses (4a, 4b) entlang der Achse (X) bezüglich der ersten Sitzzone (30A) auf der Seite des Luftauslasses (B) befindet.

18. Ventilmechanismus (1) nach einem der Ansprüche 13 bis 17, **dadurch gekennzeichnet, dass** das Ventilelement (2) entlang der Achse (X) und in einer Richtung von dem Einlass (A) zu dem Luftauslass (B) in eine Zwischenposition zwischen der Luftreinigungsposition und der geschlossenen Position bewegbar ist, in der das Ventilelement (2) das zweite Ende (4.2) des Bypasses (4a, 4b) blockiert, aber nicht in Abdichtungskontakt mit der zweiten Ventilsitzzone steht.

19. Verbrennungsmotor, **dadurch gekennzeichnet, dass** er einen Ventilmechanismus (1) nach einem der vorhergehenden Ansprüche umfasst.

20. Verbrennungsmotor nach Anspruch 19, **dadurch gekennzeichnet, dass** der Einlass (A) mit dem Auslass eines Kraftstofffilters verbunden ist, dass der Kraftstoffauslass (C1, C2) mit einer Kraftstoffpumpe verbunden ist und wobei der Luftauslass (B) mit einem Kraftstofftank verbunden ist.

21. Kraftfahrzeug, **dadurch gekennzeichnet, dass** es einen Verbrennungsmotor nach einem der Ansprüche 19 oder 20 umfasst.

## Revendications

1. Mécanisme (1) de soupape pour un moteur à combustion interne, comprenant :
- une chambre comportant :
∘ au moins une entrée (A),
∘ au moins une sortie de carburant (C1, C2),
∘ au moins une sortie d'air (B) et
- un élément (2) monobloc de soupape logé dans la chambre,
l'élément (2) de soupape pouvant se déplacer suivant un axe (X) entre :
- une position fermée (Figure 2), dans laquelle l'élément (2) de soupape bloque l'entrée (A),
- une position ouverte (Figure 3), dans laquelle l'élément (2) de soupape ne bloque ni l'entrée (A) ni la sortie de carburant (C1, C2) et dans laquelle l'élément (2) de soupape bloque la sortie d'air (B),
le mécanisme (1) de soupape étant **caractérisé en ce que** la soupape comprend au moins un by-pass (4a, 4b) comportant une première extrémité (4.1) ouvrant dans la chambre du côté de l'entrée (A) et une seconde extrémité (4.2) ouvrant dans la chambre du côté de la sortie d'air (B), et **en ce que**, dans une position de purge d'air, l'élément (2) de soupape bloque la sortie de carburant (C1, C2) et ne bloque ni l'entrée (A) ni les première et seconde extrémités (4.1, 4.2) du by-pass (4a, 4b), de sorte qu'un fluide peut s'écouler (F5) depuis.l'entrée (A) par le by-pass (4a, 4b) et s'évacue dans la sortie d'air (B).

2. Mécanisme (1) de soupape selon la revendication 1, **caractérisé en ce que** la chambre est délimitée par une surface interne (S32) latérale ayant une forme globale creuse cylindrique s'étendant suivant l'axe (X) et **en ce que** la sortie de carburant est pratiquée dans la surface interne (S32) latérale.

3. Mécanisme (1) de soupape selon la revendication 2, **caractérisé en ce que** l'élément (2) de soupape comprend une zone d'étanchéité (Z23) ayant la forme d'un cylindre présentant une section transversale complémentaire de la section transversale de la surface interne (S32) latérale délimitant la chambre.

4. Mécanisme (1) de soupape selon les revendications 2 et 3, **caractérisé en ce que** le diamètre de la surface interne (S32) délimitant la chambre est égal, dans la limite des jeux libres, au diamètre (D2) de la zone d'étanchéité (Z23) de l'élément (2) de soupape.

5. Mécanisme (1) de soupape selon la revendication 3 ou 4, **caractérisé en ce que**, suivant l'axe (X), la hauteur (H23) de la zone d'étanchéité (Z23) de l'élément (2) de soupape est strictement supérieure à la hauteur (H_{C}) de la sortie de carburant (C1, C2).

6. Mécanisme (1) de soupape selon l'une quelconque des revendications 3 à 5, **caractérisé en ce que**, en position de purge d'air, la zone d'étanchéité (Z23) de l'élément (2) de soupape bloque la sortie de carburant (C1, C2).

7. Mécanisme (1) de soupape selon l'une quelconque des revendications 3 à 6, **caractérisé en ce que**, en position ouverte suivant l'axe (X), la zone d'étanchéité (Z23) de l'élément (2) de soupape est du côté de la sortie d'air (B) par rapport à la sortie de carburant (C1, C2).

8. Mécanisme (1) de soupape selon l'une quelconque des revendications 3 à 7, **caractérisé en ce que**, en position de purge d'air, suivant l'axe (X), la première extrémité (4.1) du by-pass (4a, 4b) est située du côté de l'entrée (A) par rapport à la zone d'étanchéité (Z23) de l'élément (2) de soupape.

9. Mécanisme (1) de soupape selon l'une quelconque des revendications 3 à 8, **caractérisé en ce que**, en position de purge d'air, suivant l'axe (X), la seconde extrémité (4.2) du by-pass (4a, 4b) est située du côté de la sortie d'air (B) par rapport à la zone d'étanchéité (Z23) de l'élément (2) de soupape.

10. Mécanisme (1) de soupape selon l'une quelconque des revendications 3 à 9, **caractérisé en ce que**, suivant l'axe (X), la distance (L4) entre la première extrémité (4.1) et la seconde extrémité (4.2) du by-pass (4a, 4b) est strictement supérieure à la hauteur (H23) de la zone d'étanchéité (Z23) de l'élément (2) de soupape.

11. Mécanisme (1) de soupape selon l'une quelconque des revendications précédentes, **caractérisé en ce que** le by-pass (4a, 4b) est déporté angulairement autour de l'axe (X) par rapport à la sortie de carburant (C1, C2).

12. Mécanisme (1) de soupape selon l'une quelconque des revendications précédentes, **caractérisé en ce que** la chambre est délimitée par un boîtier (3) comprenant deux pièces (31, 32) distinctes assemblées l'une à l'autre.

13. Mécanisme (1) de soupape selon l'une quelconque des revendications précédentes, **caractérisé en ce que** l'élément (2) de soupape comprend une première zone (Z21) de contact d'étanchéité pouvant venir de manière étanche en contact contre une première zone de siège (30A) de la chambre, située suivant l'axe (X) du côté de l'entrée (A), et **en ce que** l'élément (2) de soupape comprend une seconde zone (Z22) de contact d'étanchéité pouvant s'appuyer de manière étanche contre une seconde zone de siège (30B) de la chambre, située suivant l'axe (X) du côté de la sortie d'air (B).

14. Mécanisme (1) de soupape selon la revendication 13, **caractérisé en ce que**, en position fermée, la première zone (Z21) de contact d'étanchéité de l'élément (2) de soupape vient de manière étanche en contact contre la première zone de siège (30A) de la chambre.

15. Mécanisme (1) de soupape selon la revendication 13 ou 14, **caractérisé en ce que**, en position ouverte (Figure 3) et en position de purge d'air, la première zone (Z21) de contact d'étanchéité de l'élément (2) de soupape est séparée de la première zone de siège (30A) d'une distance (d5) non nulle.

16. Mécanisme (1) de soupape selon l'une quelconque des revendications 13 à 15, **caractérisé en ce que**, en position ouverte, la seconde zone (Z22) de contact d'étanchéité de l'élément (2) de soupape vient de manière étanche en contact contre la seconde zone de siège (30B) de la chambre.

17. Mécanisme (1) de soupape selon l'une quelconque des revendications 13 à 16, **caractérisé en ce que**, suivant l'axe (X), la première extrémité (4.1) du by-pass (4a, 4b) est située du côté de la sortie d'air (B) par rapport à la première zone de siège (30A).

18. Mécanisme (1) de soupape selon l'une quelconque des revendications 13 à 17, **caractérisé en ce que**, suivant l'axe (X) et dans le sens allant de l'entrée (A) à la sortie d'air (B), l'élément (2) de soupape peut se déplacer dans une position intermédiaire entre la position de purge d'air et la position fermée, dans laquelle l'élément (2) de soupape bloque la seconde extrémité (4.2) du by-pass (4a, 4b) mais n'est pas en contact d'étanchéité avec la seconde zone de siège de soupape.

19. Moteur à combustion interne, **caractérisé en ce qu'**il comprend un mécanisme (1) de soupape selon l'une quelconque des revendications précédentes.

20. Moteur à combustion interne selon la revendication 19, **caractérisé en ce que** l'entrée (A) est raccordée à la sortie d'un filtre à carburant, **en ce que** la sortie de carburant (C1, C2) est raccordée à une pompe à carburant et dans lequel la sortie d'air (B) est raccordée à un réservoir de carburant.

21. Véhicule automobile, **caractérisé en ce qu'**il comprend un moteur à combustion interne selon la revendication 19 ou 20.
